# EUROPEAN PATENT APPLICATION

(11) **EP 3 556 443 A1**
(43) Date of publication of application: **23.10.2019**
(21) Application number: 18167975.4
(22) Date of filing: 18.04.2018
(51) Int. Cl.: A63F 13/211, A63F 13/213, A63F 13/63, A63F 13/2145, A63F 13/92, A63F 13/215, A63F 13/65

(54) **TANGIBLE MOBILE GAME PROGRAMMING ENVIRONMENT FOR NON-SPECIALISTS**

(71) Applicant: ETH Zurich, 8092 Zurich (CH)
(72) Inventor: MAGNENAT, Stéphane, 8006 Zürich (CH)

(57) **Abstract**

Mobile device (2) comprising at least one sensor (23, 24, 25) and a processing section (21), wherein the processing section (21) is configured to perform a program for programming a video game comprising: a visual editor for generating the game environment by generating visual game objects in a game level of a video game, wherein the visual editor is configured to record at least one game element on the basis of the at least one sensor (23, 24, 25) of the mobile device (2) and instantiating the at least one recorded game element in the game level as a game object or as a property of the game object; and a programming module for programming the game level by generating a set of rules governing the behaviour of the game objects.

## Description

### Field of the invention

The present invention concerns the programming of video games.

### Description of related art

Video games are an unbounded artistic space. Indeed, in a video game, not only the visual, music and audio atmospheres can be created in total freedom, but also the behaviours of the characters, which can represent humans, aliens, animals or machines. This allows game developers to create worlds, with their own rules, dynamics and history, and tell stories in a unique way. To develop video games, one must combine strong human and technical skills, making them a complete creative and intellectual media. This has outstanding motivational power; for example, research shows that video games are a great approach to teach programming to beginners.

However, creating a video game is a tedious process, involving a complex set of tools like editors for the visual and audio assets, a programming environment, tools for web site and deployment and so on to be used in a proper order. This limits the creation of video games to professionals and enthusiast amateurs who could invest months or years in training.

### Brief summary of the invention

It is an object of the invention to make the process of programming a video game easier and more accessible.

According to the invention, this object is achieved by a method, a computer program, a mobile device and a system according to the independent claims.

By realising a video game programming tool on a mobile device and by using the at least one sensor of the mobile device, new game elements can be easily recorded and added as a game object or a property of a game object in the environment of the video game. This overcomes the cumbersome programming and definition of game objects and allows also non-specialist to program video games. In addition, the video game programming tool can be used everywhere, because it is realised in the mobile device. This allows to program the video game at places, where the inspirations for the game objects are taken and recorded. This allows also to use dead time on the mobile phone to create original content for video games instead of consuming superficial content.

The dependant claims refer to further advantageous embodiments.

### Brief Description of the Drawings

The invention will be better understood with the aid of the description of an embodiment given by way of example and illustrated by the figures, in which:
Fig. 1 shows an embodiment of a system for programming a video game.
Fig. 2 shows an embodiment of a method for programming a video game.
Fig. 3 shows an embodiment of the step of generating the game environment.

### Detailed Description of possible embodiments of the Invention

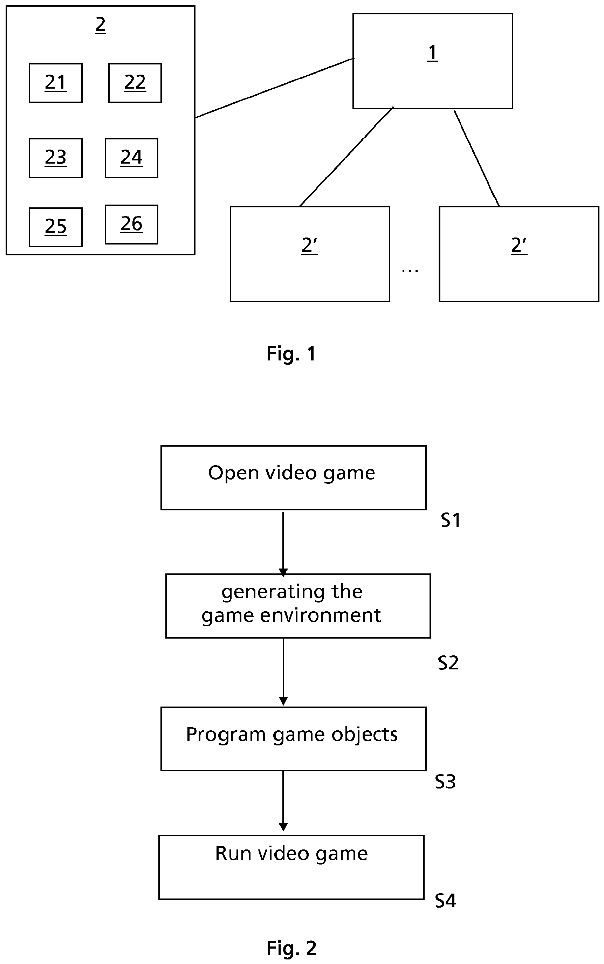

Fig. 1 shows an embodiment of the system for programming a video game. The system comprises a server 1 and multiple client devices 2, 2'.

The client devices 2, 2' are configured to allow users of the client devices 2, 2' to program a video game as explained in more detail below and/or configured to interact with the server 1 as explained below. Preferably, the client device 2, 2' is a standard processing device with a client software (client program or client app) configured to program the video game and/or configured to interact with the server 1.

At least one of the client devices 2, preferably multiple of the client devices 2, 2' are mobile devices. Mobile devices are preferably smartphones and/or tablets. It is however also possible that the mobile device is a virtual or augmented reality headset or glasses. The mobile device 2 comprises preferably a processing unit 21, a user interaction means 22, a communication interface 26 and at least one sensor.

The processing unit 21 is any hardware configured to perform the functions of the mobile device 2 described in here, in particular to program the video game and/or to interact with the server 1. The processing unit 21 can for example comprises a combination of a central processor unit (CPU), graphics processing unit (GPU), Random access memory (RAM), Read-only memory (ROM) and/or a storage for storing the client software as well known in the state of the art. However, any other construction of the processing unit 21 is possible.

The user interactions means 22 is configured to show a graphical user interface for programming the video game and for receiving user input from the user of the mobile device 2. A touch screen 22 is a preferred embodiment for the user interaction means 22 of the mobile device 2. Preferably, the client software and/or the mobile device 2 is configured to program the video game, in particular one or some or all of the later described single steps, mainly by touch actions on the touch screen. Instead of the touch screen 22 other user interaction means could be used in the mobile device, e.g. for the virtual or augmented reality headset or glasses. For examples user inputs and user interactions can be made by eye movements or by body gestures. For example, the user interaction means 22 could comprise one or two displays or projectors for showing the graphical user interface to the user. For example, the user interaction means 22 could comprise a gesture detection means for detecting gestures of the body for a user input. Gestures of the body could be gestures of the eye, of the head, of the hands, etc.. The gesture detection means could also detect gestures of others than the user wearing the mobile device.

The communication interface 26 is configured to communicate with the server 1. Preferably, the communication interface 26 is a wireless communication interface. Preferably, the communication interface 26 is configured to access the internet. Preferably, the communication with the server 1 works over the internet. Preferably, the communication interface 26 is configured to communicate over a cellular radio network, preferably a phone cellular radio network like GPRS, EDGE, UMTS (3G), LTE (4G), 5G, etc. Preferably, the communication interface 26 is configured to communicate over a wireless local area network (WLAN). However, other wireless communication methods are possible and also wired communication methods are possible. It is also possible that there is no connection to a server 1. There could also be peer-to-peer communication between two client devices, for example through wireless radio, but also through infrared, sound, and visual light and images (for examples two screen seeing each others through their cameras).

The at least one sensor is configured to record game elements. A game element is a general definition of an element for a video game. The game element can be instantiated once as a game object or its property or several times as game objects or its properties in (a game level of) a video game. Instantiating the game element as a game object includes also the possibility to add this game object to another game object. The game object added to the other game object can than be shown or hidden depending on the set of rules and/or a condition of the video game. In one example the game object is the realisation of the game element in the video game, for example at a special location in the environment of the video game. In another example, the game object is existing and the instantiated game element provides a property of the game object like an animation or a sound. Game elements can be 3D-objects, images, video sequences, audio sequences, movements, etc..

In one embodiment, the at least one sensor comprises a camera for recording the visual game elements. A camera is preferably configured to record (two dimensional) images and/or videos. The camera can also be configured to record 3D-images and/or videos. The camera can for example be a depth-camera, a time of flight camera, a 3D scanner, a plenoptic camera or any other camera type being configured to record 3D images and/or videos. Visual game elements can be the shape and/or the surface appearance of an object, a game character, a background, etc.

In one embodiment, the at least one sensor comprises a microphone for recording audio sequences as game elements.

In one embodiment, the at least one sensor comprises an inertial measurement unit (IMU) for recording a movement of the mobile device 2. Preferably, the IMU comprises an accelerometer, a gyroscope and/or magnetometer. Other or additional movement sensors could be used to record a movement of the mobile device 2. For example, a triangulation sensor could be used for tracking a position change and thus a movement. The triangulation sensor could also be used in combination with the IMU to improve the movement detection. GPS or WI-FI-triangulation sensors can be used as triangulation sensor. The movement of the mobile device 2 can be used for defining a movement of a certain game object. For example, the user of the mobile device 2 performs a certain movement with the mobile device 2 in a recording period. This recorded movement can then be used for defining a movement of a game object in the video game to be programmed.

Preferably, the game elements are prepared by the user on the basis of the one or more recordings of the at least one sensor. Preferably, the client software and/or the mobile device 2 performs an automatic or semi-automatic pre-processing to convert the recordings from the sensor into potential game elements for the video game to be programmed. For example, the video images from the camera can be pre-processed to rendered 3D structures with a reduced storage amount and with a quick reproducibility. For example, audio sequences can be changed in volume or a filter for noise removal can be applied. For example, a probabilistic filter like a Kalman filter can be applied on the recorded movement. For the semi-automatic pre-processing, the user could select the kind or type of game element the user wants to extract from the recording. For example, if he would like to extract the colour or image recorded for a background or if he would like to extract the 3D shape of an object. Other examples of pre-processing are foreground extraction of 2D object based on different methods such as geometric shapes (square, ellipses), manual selection, intelligent foreground/background separation, etc..

Preferably, a game element can be based on one or more recordings. For example, a game element could be a combination of two or more of a 3D-shape, a surface appearance, a sound and a movement of the game element.

The client software and/or the mobile device 2 comprise preferably a game element library with multiple game elements. The game element library can contain also game elements which are not based on recordings, e.g. images with partial transparency (sprites), geometric visual elements, sounds and movements which appear often in video games. Game elements determined from recordings of the at least one recording can be stored in the game element library for later use in the video game. However, it is also possible to use a game element determined from at least one recording just for one game object (without storing the game element for later use in the library). The game element library could be stored in the mobile device 2 and/or in the server 1. For example, the game element library can be partly stored on the server 1 like for game elements which are available for multiple users and partly be stored on the mobile device 2 like for game elements of the user. The user could also share some game elements based on recordings of the at least one sensor of the mobile device 2 with other users of other client devices 2'.

The server 1 is preferably configured to communicate with the client devices 2, 2' and/or the respective client software on those devices 2, 2'. The server 1 can perform all, some, certain processing steps described later for programming the video game on the mobile device 1. The server 1 can be one or more computing devices with a communication connection to the client devices 2, 2'. The server 1 can comprise a plurality of computing devices which are arranged in a rack, a server room or even at remote locations. The server 1 is preferably configured to share video games among different users as described in the following.

Preferably, the system for programming video games comprises a plurality of users which are registered at the system. The user registration might also be implicit, for example through their mobile device account, username, email, International Mobile Equipment Identity (IMEI) or any other unique identifier. Each user can program video games with its client devices 2, 2', upload or store programmed video games for sharing or co-programming with other users, play video games shared by the server 1 or by another user. Preferably, the system and/or the server 1 comprises a video game library which is shared among the users. The video game library comprises a plurality of video games. For each video games it associates characteristics of the game like the author, who has access (all users, some defined users, only programming users, only consuming users), how access is granted (for free, for compensation in money, for programming services), state (ready, under development), what kind of access (for programming, for playing, for both). Each user can thus access one of the video games in the video game library for playing the game or for further developing the game or for using the video game as a basis for a new game. Each user can upload or insert a video game programmed or further developed in the video game library for sharing the video game with other users. When the user uploads or inserts the video game, he could define the above-mentioned characteristics of the video game for the defining the kind of sharing. Thus, a kind of video game marketplace can be created where video games can be exchanged not only for playing, but also for developing and co-developing video games.

Fig. 2 shows now a method for programming a video game on a mobile device 2. In the following, we will for simplicity describe the method performed by the mobile device 2. This shall mean, that all user interactions described here for programming the video game are performed by a user on the mobile device 2. This does not exclude that at least a part of the described steps is performed by a processing unit (not shown) on the server 1 or even on other client devices 2' of other users. This shall further not exclude that some parts of the same video game are programmed from another client device 2' which is not a mobile device.

In a first step S1, a video game is opened. In this context, the video game is opened in a programming mode which allows to further develop the opened video game by programming steps performed by the user on the mobile device 2 and/or on the client software. The step of opening a video game can comprise the initialization of a new video game, if the opened video game does not exist yet. The step of opening a video game can also be the opening of an existing video game or video game project. The existing video game to be opened can be stored in a video game file stored on the mobile device 2 or on the server 1. The existing video game can be a video game under development of the user of the mobile device 2. The existing video game can also be a video game offered by other users via the server 1 for further developing the video game. The opened video game is for the sake of brevity called shortly the video game. The video game can comprise one or more game levels. Preferably an introductory screen listing lists games created by the user, by her friends and by the community. Users can search for games, and optionally buy and sell them. If creators of third-party games allow, these games can be "forked", that is, used as a base to start a new game. Several games can be combined together. The system tracks the tree of authors, as in current source code revision systems such as git. All content of a game, including levels, visual and audio assets, characters logic, etc. are available through this system. Data analytics and machine learning is used on the server to present the content to the user in a personalised way.

In a further step S2, the game environment is generated. The generation of the game environment comprises preferably the generation of the visual game environment, the audio game environment and/or maybe other properties of the game environment. The game environment is generated by generating game objects in a game level of the video game. In the state of the art, the preparation of the game environment needed to be programmed by design experts and/or separate editing tools were needed to generate the game environment. In a preferred embodiment, the mobile device 2 and/or the client software comprises a visual programming interface for generating the game environment. The visual programming interface is a graphical user interface of a user interaction means 22 of the mobile device 2 which allows to instantiate game elements as game objects in the game level by a user interaction of the user on the user interaction means 22. In one embodiment, the visual programming interface is a graphical user interface on the touch screen 22 of the mobile device 2 which allows to instantiate game element as game objects in the game level by a touch interaction of the user on the touch screen 22. The touch interaction of the user generates a block of programming code for the video game defining the game object in the game environment as defined by the touch interaction. The touch interaction is for example a drag and drop or a selection touch interaction. The touch interaction corresponds in particular not to a keyboard input corresponding to the generated block of programming code. This visual programming interface facilitates the generation of game objects in the game environment, because the time and expert knowledge for coding can be avoided. In the following, the exemplary generation of game objects is described in more detail. In another embodiment, the visual programming interface is a graphical user interface of a user interaction means 22 of the mobile device 2 which allows to instantiate game element as game objects in the game level by a gesture recognition of the user in the user interaction means 22.

Game elements are available in a library. New game elements are captured from the real world by the user through the sensors 23, 24, 25 of the mobile device 2. For example, the visual elements of the game (main protagonist, other characters, obstacles and background) are captured through the camera 23. Computer vision algorithms allowing the user to crop them easily. For example, the audio effects are recorded with the microphone 24 built in the mobile device 2. For example, the movement or animations of game elements, for example a platform doing a pre-defined movement, are recorded by the IMU 25 of the mobile device 2. These animations can be briefly edited, for example set to loop continuously. In addition, game elements can be collected from other sources, such as the address book of the user, or his photo gallery. Game elements instantiated in the level are called game objects. A game object can be the character controlled by the player, a non-playing character, an obstacle or an element of the decor. The user can freely layout game objects and change their size through user interactions on the touch screen 22. User interactions can be gestures, haptic interactions with the touch screen

As already mentioned above, the step of recording new game elements comprise preferably a (automatic / semi-automatic) processing step that transforms raw sensor data into game elements in the mobile device 2. For example for visual assets, once they are acquired from the device's camera 23 or from another source, different cropping algorithms are available. The user can select a geometric region (rectangular, circular or polygonal), or mark the object and the background of the image by touch and a classification algorithm will crop automatically. For example for audio assets, once they are recorded using the device's microphone or taken from another source, an algorithm will trim silence at the beginning and the end of the sample, and adjust the volume. For example for animations, the user demonstrates a movement using the mobile device 2, which is recorded by the combination of its accelerometer, gyroscope and magnetometer. A probabilistic filter, for example a Kalman filter, is applied to smooth the trajectory. Then, the user can apply small changes, for example to make it loop or to control its ruggedness through easy-to-understand icons. The trajectory is previewed on the screen of the device.

In one embodiment, the mobile device 2 could connect with external sensor devices for recording game elements. Preferably this external sensor device comprises an IMU or any other movement sensor for recording the movement of the external sensor device. The external sensor device could also be an augmented or virtual reality headset or glasses with a camera, microphone and/or IMU unit as described above. The external sensor device with the IMU or any other movement sensor is preferably configured to be attached to a part of a body to record the movement of the corresponding part of the body of a character in the video game. The body is preferably a human body, but can also be an animal body or even a robot body. This allows to record in an easy way the movement of a body part like a hand, a foot and/or a head by an external sensor directly into the mobile device 2 for the use of the movement of the corresponding part of a body of the character in the video game. The external sensor device could be any consumer wearable like a smart watch, smart glasses, running sensors in shoes, etc.. The connection between the mobile device 2 and the external sensor could be via a short range wireless communication technology like Bluetooth, NFC or via a wired communication technology like USB or via other wireless communication technology like WLAN.

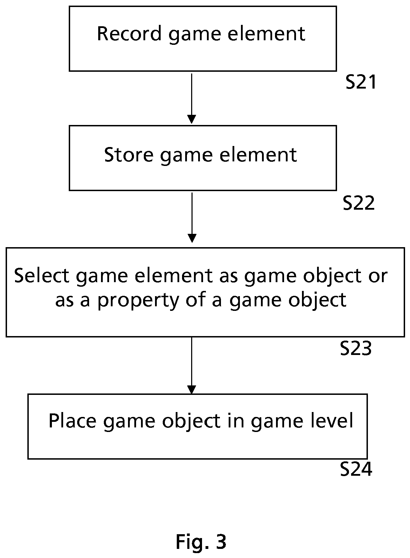

Fig. 3 shows one embodiment for the step S2 of generating the game environment. In a first step S21, a game element is recorded by the at least one sensor 23, 24, 25 of the mobile device 2. In the optional step S22, the recorded (and optionally processed) game element is stored in a library. In step S23, the recorded and/or stored game element is selected as a game element or as a property of a game object. In step S24, if the game element is selected as game object, the game objects needs to be placed in the game environment of the game level of the video game.

In step S3, the game objects are programmed. This means that for each game object, a set of rules governing the behaviour of the game objects are generated. In the state of the art, the programming of the game objects needed to be programmed by programmers with separate programming tools. In a preferred embodiment, the mobile device 2 and/or the client software comprises a visual programming interface for programming the game objects. The visual programming interface is a graphical user interface on the touch screen 22 of the mobile device 2 which allows to define the set of rules for the game objects of the game level by a touch interaction of the user on the touch screen 22. The touch interaction of the user generates a block of programming code for the video game defining some of the set of rules defined by the touch interaction. The touch interaction is for example a drag and drop or a selection touch interaction. The touch interaction corresponds in particular not to a keyboard input corresponding to the generated block of programming code. This visual programming interface facilitates the generation of game objects in the game environment, because the time and expert knowledge for coding can be avoided. In the following, the exemplary game object programming environment for programming of a set of rules for one game object is explained in more detail.

This environment allows to generate a set of rules governing the behaviour of the game object. Preferably, the set of rules set up the physical properties of the object, such as how it reacts to gravity and collision with other objects. The environment also allows to set up the logic of the object, e.g. by visually assembling lists of events-actions pairs, optionally ordered by states defined in the video game. For each pair, all actions are triggered when all events occur.

The possible events are:
- initialization: when the level starts or the state is entered,
- collision: when another game object touches the game object,
- proximity: when another game object is in the vicinity of the game object,
- user input: when the user presses a virtual button on the screen or moves the device,
- timer elapsed: after a specific time has elapsed,
- animation finished: when a specific animation has finished,
- imu: the mobile device has a given position or orientation,
- sound finished: a sound has finished playing,
- check variable: a variable has a given range of value.
Obviously, other events are possible. The user can for example define himself new events. A new event can be defined just for a one time use or can be stored for future use such that the user can select the newly defined event from the user interface menu of events.

The possible actions are:
- move: the speed of the game object is set,
- force: a force is applied to the game object for a small duration,
- start animation: this object will follow a pre-recorded path,
- destroy: the game object self-destroys,
- spawn: a new game object of a given type is created at the location of the game object,
- change sprite: a different image is selected for the game object,
- timer: the timer is started for a given duration,
- change state: another list of events-actions pairs will be considered for the object,
- change level: another level is loaded,
- sound: start playing a sound,
- set variable: set the value of a variable,
- show/hide child: show or hide a child game object,
- save/load screen: show a save or load screen.
Obviously, other actions are possible. The user can for example define himself new actions. A new action can be defined just for a one time use or can be stored for future use such that the user can select the newly defined action from the user interface menu of actions.

The order of the steps S2 and S3 is arbitrary. It is possible to define first all game objects in step S2 and program then their behaviour in step S3. Alternatively, each game object can be defined in step S2 and then programmed in step S3 such that the steps S2 and S3 are alternated.

In step S4, the programmed video game can be executed/run on a game engine to test the programmed video game. This step is optional, but recommended. The game engine runs the programmed game level. That is, it analyses the interactions between the game objects and applies the actions defined in the events-actions pairs. To do so, a physics engine simulates the laws of physics in the virtual world and detects collisions, and one low-overhead virtual machine per game objects executes the logic in reaction to physical events. Moreover, virtual buttons can be displayed on the screen of the device, allowing the user to interact with the game. It is further possible to use the abilities of the mobile device 2 to allow user interaction in the video game. For example, the at least one sensor, e.g. the camera 23, the microphone 24 and/or the IMU 25, can be used to detect user input (e.g. by a gesture) in the video game.

The video game can obviously also be closed and reopened for stopping and continuing the programming process, respectively.

The video game can be tested on the mobile device 2, e.g. by running the programmed video game on the game engine of the mobile device 2. It is however also possible to test the programmed video game in a game browser. This allows to share the link to the programmed video game by email, instant messenger, SMS or other communication medium.

The method described is preferably realised as a software running on the system and/or on the mobile device 2. The described steps can be performed exclusively by the mobile device 2. The described steps could be processed however also by the server 1. Such a software comprises preferably a visual editor module for performing the step S2 described above. Such a software comprises preferably a (visual) game programming module for performing the step S3 described above. Such a software comprises preferably a game engine for running a programmed game or a selected game, i.e. for performing the step S4 described above.

## Claims

1. Method for programming a video game on a processing device comprising the following steps performed at least partially on the processing device:
opening a video game;
generating the game environment by generating game objects in a game level of the video game (S2);
programming the game object by generating a set of rules governing the behaviour of the game objects (S3);
**characterized in that**
the processing device is a mobile device (2) with at least one sensor (23, 24, 25), and
the step of generating the game environment comprises the steps of recording at least one game element on the basis of the at least one sensor (23, 24, 25) of the mobile device (2) (S21) and instantiating the at least one recorded game element in the game level as a game object or as a property of a game object (S23, S24).

2. Method according to one of the previous claims,
wherein the at least one sensor comprises a camera (23), and one of the at least one game element is an image taken from the camera (23) or a video sequence taken from the camera (23) or a 3D object taken from the camera (23) or computed from images or a video sequence taken from the camera (23); and/or
wherein the at least one sensor comprises a microphone (24), and one of the at least one game element is an audio sequence taken from the microphone; and/or
wherein the at least one sensor comprises an inertial measurement unit (25), and one of the at least one game element is a movement recorded with the inertial measurement unit (25).

3. Method according to one of the previous claims, wherein a plurality of game elements are stored in a library from where a user can select a game element as a game object or as a property of a game object in the game level, wherein each game element recorded with the at least one sensor (23, 24, 25) can be stored in the library.

4. Method according to one of the previous claims, wherein the step of generating the game environment (S2) is performed by a user of the mobile device (2) via a graphical user interface on a user interaction means (22) of the mobile device (2) which allows to instantiate game element as game objects in the game level by a user interaction of the user on the user interaction means (22), wherein the user interaction of the user generates a block of programming code for the video game defining the game object in the game environment as defined by the user interaction.

5. Method according to one of the previous claims, wherein the step of programming the game level is performed by a user of the mobile device (2) via a graphical user interface on a user interaction means (22) of the mobile device (2) which allows to define the set of rules for the game objects of the game level by a user interaction of the user on the user interaction means (22), wherein the user interaction of the user generates a block of programming code for the video game defining some of the set of rules defined by the user interaction.

6. Method according to the previous claim, wherein the set of rules comprises for each game object at least one event-action-pair defining each, at least one action for the game object, when a certain event is detected, wherein the user selects the event and/or the action from a list of predefined events and/or actions by a selection on the user interaction means (22).

7. Method according to one of the previous claims, comprising the step of running the game level on a game engine on the mobile device (2) (S4).

8. Method according to one of the previous claims, wherein mobile device (2) comprises a client program associated to a user registered with a server (1) for performing the steps of programming the video game on the mobile device (2), wherein the client program of the user interacts with the server (1) and/or with other users registered at the server (1).

9. Method according to claim 8, wherein the client program receives from the server (1) and shows on a user interaction means (22) a list of video games from other users, wherein one of the video games of the other users is opened by the client program and is further developed by the user actions of the user of the client program on the mobile device (2).

10. Method according to claim 9, wherein the server (1) keeps track of the authorship of each user which contributed on the video game.

11. Method according to one of claims 8 to 10, wherein the client program of the user makes the video game programmed available for other users on the server for sale, for further development and/or for playing upon request of the user.

12. Computer program configured to perform the steps of the method according to one of the previous claims, when executed on a mobile device (2) with at least one sensor (23, 24, 25) or when executed on a system comprising a mobile device (2) with at least one sensor (23, 24, 25) and a server (1).

13. Mobile device (2) comprising at least one sensor (23, 24, 25) and a processing section (21), wherein the processing section (21) is configured to perform a program for programming a video game comprising:
a visual editor for generating the game environment by generating visual game objects in a game level of a video game, wherein the visual editor is configured to record at least one game element on the basis of the at least one sensor (23, 24, 25) of the mobile device (2) and instantiating the at least one recorded game element in the game level as a game object or as a property of the game object; and
a programming module for programming the game level by generating a set of rules governing the behaviour of the game objects.

14. Mobile device (2) according to the previous claim, wherein the program for programming the video game comprises a game engine for running the programmed game.

15. System comprising a server (1) and a plurality of mobile devices (2, 2') according to one of claims 13 or 14.
